# EUROPÄISCHE PATENTSCHRIFT

(11) **EP 1 170 341 B1**
(45) Veröffentlichungstag und Bekanntmachung des Hinweises auf die Patenterteilung: **31.03.2004**
(21) Anmeldenummer: 01116034.8
(22) Anmeldetag: 02.07.2001
(51) Int. Cl.: C09D 163/00, C08G 59/54, C04B 40/00, C04B 24/28

(54) **Einkomponentige, pulverformige Epoxidharzbeschichtung**
A one-component epoxy resin coating powder
Résine epoxyde pulvérulente a un composant pour revêtements

(30) Priorität: 04.07.2000 DE 10032305
(43) Veröffentlichungstag der Anmeldung: 09.01.2002
(73) Patentinhaber: STO AG, D-79780 Stühlingen (DE)
(72) Erfinder: Zink, Ingo, 78166 Donaueschingen (DE); Güntert, Uwe, 79780 Stühlingen (DE); Nosbüsch, Günter, 79879 Wutach-Ewattingen (DE)
(74) Vertreter: Patentanwälte Leinweber & Zimmermann

(56) Entgegenhaltungen:
- EP-A- 0 207 473
- EP-A- 0 806 459
- WO-A-98/29465
- DE-A- 3 827 488
- US-A- 3 474 056

## Beschreibung

Die Erfindung bezieht sich auf ein Verfahren zur Herstellung einer als Estrich oder Mörtel dienenden Beschichtungsmasse.

Seit Jahrzehnten werden Epoxidharze mit großem Erfolg zur Beschichtung von Substraten unterschiedlichster Art eingesetzt. Speziell die hohe Beständigkeit gegen chemischen und mechanischen Angriff machen diese Epoxidharze zu einem prädestinierten Material, um Schutzschichten auszubilden, die zur Verbesserung der Ästhetik und zur Erhaltung der Funktion von Bauteilen, Bauwerken, Fahrzeugen und deren Komponenten sowie elektrotechnischen und elektronischen Elementen eingesetzt werden. Die Anwendungsformen sind vielschichtig; sie reichen von pulverförmig, z.B bei Anwendung in der Pulveriackbranche, über in geeigneten Lösemitteln gelöst als Lack bis hin zu 100%ig flüssigen Kompositionen, die u.a. bei der Beschichtung von Industriefußböden, Auffangwannen, Behälterauskleidungen, Balkonen und Garagen zum Einsatz kommen. Prinzipiell werden flüssige Epoxidharzbeschichtungen, die erhärten sollen, mit flüssigen, sog. Epoxidharzhärtern vor der Applikation gemischt, so daß die daraus resultierenden Mischungen nach der Verwendung gemäß dem folgenden Reaktionsschema erhärten und den gewünschten Beschichtungsfilm ausbilden können:

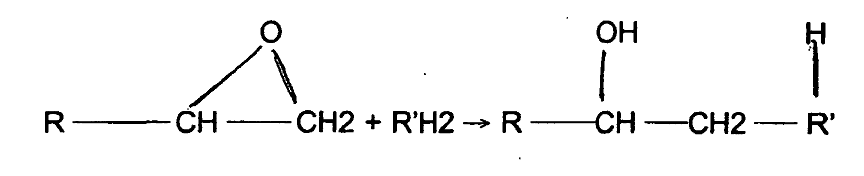

Nachteilig ist bei der industriellen und handwerklichen Verwendung raumtemperaturhärtender Beschichtungsstoffe auf der Basis von Epoxidharz- und Epoxidharzhärtergemischen, daß die beiden Reaktionsharzkomponenten erst kurz vor der Verarbeitung miteinander vermischt werden dürfen.

Bei derartigen zweikomponentigen Systemen liegt der Grund darin, daß die beschriebene chemische Reaktion, die bei der Verfestigung des Beschichtungsfilms benutzt wird, nur eine beschränkte Verwendung der hergestellten Mischung erlaubt. Nach dem Ablauf der Verarbeitungszeit, der sog. Topfzeit (potlife) ist die Mischung aufgrund der aus der chemischen Reaktion resultierenden Viskositätserhöhung nicht mehr verarbeitbar oder die gewünschte Qualität nicht mehr erzielbar.

Ein weiterer Nachteil der flüssigen Epoxidharz- und Epoxidharzhärterkomponenten ist die vorgeschriebene Gefahrenkennzeichnung gemäß den gesetzlichen Vorgaben sowie das bestehende Risiko bei der Lagerung und Handhabung dieser flüssigen, reaktiven Stoffe, für die umfangreiche Vorschriften zu beachten sind.

An dieser Stelle ist zu erwähnen, daß bereits eine Trockenmischung von Epoxidharz und Füllstoffen mit Zement bekannt ist (EP 207 473), die ebenfalls - baustellenseitig mit Anmachwasser vermischt - angewendet werden kann. Nachteilig wirkt sich hierbei die verbindliche Kombination mit Zement aus, die zu einem typischen ECC (Epoxy-Cement-Concrete) führt.

Bekanntermaßen haben diese Kompositionen erhebliche Einschränkungen in der Handhabung, da die schwierig zu steuemde Reaktion von Zement in Anwesenheit von Epoxidharzbindemitteln Rissbildung, Ausschwimmerscheinungen und Ausblühungen zur Folge hat. Weiterhin sind ECC-Beschichtungen nicht ästhetisch gestaltbar, da die Farbe des Zementes und die resultierende rauhe Oberfläche der Beschichtung dies nicht zuläßt.

Ein weiterer Nachteil ist, daß die Beschichtungen gemäß EP 207 473 keinen ausreichenden Verschleißschutz ohne geeignete Deckversiegelung zulassen. Darüberhinaus ist die Beständigkeit solcher Beschichtungen gegenüber saueren Medien wie z.B. Mineralsäuren und sauer reagierenden Substanzen äußerst schlecht.

In der WO 98/29465 ist eine eine Epoxidharz und einen Epoxidharzhärter enthaltende Pulvermischung beschrieben, welche zur Herstellung einer Paste einsetzbar ist, mit der ein Behälter beschichtet werden kann. Die in der WO 98/29465 beschriebene Paste härtet bei Temperaturen von mehr als 100°C aus.

In der EP 0 806 459 A2 sind ebenfalls erst bei Temperaturen von mehr als 100°C aushärtende Beschichtungszusammensetzungen beschrieben, welche zur Herstellung einer Beschichtung auf Holzsubstraten geeignet sind.

Der Erfindung liegt die Aufgabe zugrunde, unter Beseitigung der vorgenannten Nachteile einen als Estrich oder Mörtel einsetzbaren Epoxidharzbeschichtungsstoff zu schaffen, bei dem die vorgenannten Gefahren und Risiken, die mit der Handhabung herkömmlicher Epoxidharzbeschichtungsstoffe verbunden sind, und die Notwendigkeit der Beachtung der erwähnten Vorschriften entfallen.

Erfindungsgemäß'wird diese Aufgabe durch ein Verfahren mit den Merkmalen des Patentanspruchs 1 gelöst.

Erfindungsgemäß wird somit der Epoxidharzbeschichtungsstoff in Form einer Trockenmischung - bestehend aus trockenem reaktiven Epoxidharz, trockenem reaktiven Polyamin-Epoxidharzhärter sowie den für die wirksame Zusammensetzung einer funktionstüchtigen Beschichtung notwendigen Stoffen, wie Füllstoffe, Pigmente, Additive und/oder Katalysatoren - zur Verfügung gestellt.

Die Verwendung von Epoxidharzen und Epoxidharzhärtern, bei denen es sich im wesentlichen um Polyamine, Polyaminaddukte und Polyaminoamide handelt, ermöglicht es, wasserverdünnbare Beschichtungsstoffe zu formulieren, die durch die nachstehenden Vorteile geprägt sind: Sie sind mit Wasser reinigungsfähig, besitzen einen niedrigen Flammpunkt, haften auf feuchten Untergründen, erfordem nur einen geringen Einsatz an flüchtigen organischen Chemikalien, sind praktisch geruchsfrei und weisen einen geringen Gehalt an freiem Amin auf.

Der Erfindung liegt somit als wesentlicher Gedanke die Erkenntnis zugrunde, daß nicht flüssige, feste oder halbfeste Epoxidharze und Epoxidharzhärter miteinander als wässrige Emulsion vermischt werden, wie es z.B. in der DE 38 27 488 beschrieben ist, sondern daß reaktive Epoxidharze und Epoxidharzhärter in trockener, pulverförmiger Form mit den zusätzlichen notwendigen Feststoffen ein Trockengemisch ergeben, das mit Wasser vermischt zu einem verarbeitungsfähigen Gemisch führt. Auf diese Weise wird der vorgenannte Nachteil des Standes der Technik, bei dem von zweikomponentigen Systemen ausgegangen wird und die Aktivierung durch Zugabe von Härtern kurz vor der Applikation erfolgt, beseitigt.

Nachstehend sind zwei Beispiele für die erfindungsgemäße Beseitigung der vorstehend aufgeführten Nachteile aufgeführt, die aus beiden Beispielen resultierenden Beschichtungen sind hoch abriebfest, ästhetisch anspruchsvoll gestaltbar und tönbar. Die fachmännisch hergestellten Flächen genügen den hohen Anforderungen an eine technisch funktionelle Schutzbeschichtung für Industrieböden, Lagerbehälter, Balkonbeschichtungen und Bautenfarben:

### Beispiel 1: ,Betonfarbe 1komponentig, mit Wasser anrührbar

| | |
|---|---|
| Polyaminhärterpulver EW ca. 140 | 14,28 |
| Kieselsäure Verdickungsmittel | 0,25 |
| Epoxidharzpulver EW ca. 180 | 18,55 |
| Kieselgrau-Pigment | 13,57 |
| Synthetischer Carbonat-Füllstoff | 21,50 |
| Byk Entschäumer-Additiv | 0,84 |
| Emulgator | 0,42 |
| *Trockenfarbe* **Σ** | 69,41 |
| Anmachwasser | 30,56 |
| **Verarbeitungsfertige Farbe** Σ | **100,00** |

| | |
|---|---|
| Dichte (DIN 53217) | 1,4 kg/Liter |
| Viskosität (DIN 53019) | ca. 3000 mPa.s |
| Verarbeitungszeit ei 20°C | ca. 2 Stunden |
| Begehbar bei 120°C nach | ca. 12 Stunden |
| Mechanisch voll belastbar bei 20°C nach | 7 Tagen |

### Beispiel 2: Dickschichtiger Verlaufmörtel für Industriebödenbeschichtungen 1komponentig, mit Wasser anrührbar

| | |
|---|---|
| Polyaminhärterpulver EW ca. 110 | 6,08 |
| Epoxidharzpulver EW ca. 200 | 10,10 |
| Schwerspatmehl, natürlich | 33,15 |
| Quarzmehl fein, natürlich | 27,01 |
| Kieselsäure-Verdickungsmittel | 0,46 |
| Byk Entschäumer-Additiv | 1,10 |
| Kieselgrau-Pigment | 4,60 |
| *Trockenmörtel* Σ | *82,50* |
| Anmachwasser, demineralisiert | 17,50 |
| **Verarbeitungsfertiges Gemisch Σ** | **100,00** |

| | |
|---|---|
| Dichte (DIN 53217) | 1,8 kg/Liter |
| Auslaufzeit (DIN 53211) 8mm Düse bei 23°C | 60 Sekunden |
| Verarbeitungszeit bei 23°C | 30 - 40 Minuten |
| Druckfestigkeit DIN/EN ISO 604 | ca. 50 N/mm² |

## Patentansprüche

1. Verfahren zum Herstellen einer als Estrich oder Mörtel dienenden Beschichtungsmasse, bei dem eine Trockenmischung aus pulverförmigem bzw. granuliertem Epoxidharz und einem aus einem hochmolekularen Polyaminaddukt und/oder Polyaminoamid bestehenden Epoxidhärter in Wasser redispergiert oder gelöst wird.

2. Verfahren nach Anspruch 1, **dadurch gekennzeichnet, daß** der Trockenmischung Füllstoffe, Pigmente und/oder Additive beigegeben werden.

## Claims

1. Method of producing a coating material serving as a screed or mortar, in which a dry mixture of pulverulent and/or granulated epoxy resin and of an epoxy hardener composed of a high molecular mass polyamine adduct and/or polyamino amide is dissolved or redispersed in water.

2. Method according to Claim 1, **characterized in that** fillers, pigments and/or additives are added to the dry mixture.

## Revendications

1. Procédé de production d'une matière de revêtement utilisable comme chape ou mortier, dans lequel un mélange sec formé de résine époxy en poudre ou en granules et d'un durcisseur époxy constitué d'un produit d'addition polyaminé et/ou d'un polyaminoamide de haut poids moléculaire est redispersé ou dissous dans l'eau.

2. Procédé suivant la revendication 1, **caractérisé en ce que** des charges, des pigments et/ou des additifs sont ajoutés au mélange sec.
